# EUROPEAN PATENT SPECIFICATION

(11) **EP 1 559 153 B1**
(45) Date of publication and mention of the grant of the patent: **04.06.2014**
(21) Application number: 03810729.8
(22) Date of filing: 07.11.2003
(51) Int. Cl.: H01M 2/16, H01M 4/64, H01M 10/04, H01M 10/28, H01M 4/04

(54) **AN ELECTRODE, A METHOD FOR MANUFACTURING AN ELECTRODE AND A BIPOLAR BATTERY**
ELEKTRODE, VERFAHREN ZUR HERSTELLUNG EINER ELEKTRODE UND BIPOLARBATTERIE
ELECTRODE, PROCEDE DE FABRICATION D'UNE ELECTRODE ET BATTERIE BIPOLAIRE

(30) Priority: 08.11.2002 SE 0203307; 09.05.2003 US 434167
(43) Date of publication of application: 03.08.2005
(73) Proprietor: Nilar International AB, 183 12 Täby (SE)
(72) Inventor: FREDRIKSSON, Lars, S-183 51 Täby (SE); PUESTER, Neil, H., Aurora, CA 80015-1711 (US)
(74) Representative: Hedman, Anders
(86) International application number: PCT/SE2003/001722
(87) International publication number: WO 2004/042846

(56) References cited:
- EP-A1- 0 239 846
- WO-A1-88/07097
- WO-A1-96/12313
- DE-A1- 3 117 660
- GB-A- 1 038 152
- US-A- 3 560 262
- US-A- 4 161 569
- US-A- 5 552 243
- US-A- 5 993 494

## Description

### Technical field

The present invention relates to an electrode, method for manufacturing an electrode, biplate assembly and a bipolar battery.

### Background to the invention

Traditionally, electrodes to bipolar batteries have been manufactured using some type of conductive carrier, a metal grid or mesh, to increase the conductivity between the electrode and the biplate of the biplate assembly, and to support the electrode during transport and assembly. Active material in the form of powder has also been used, which has been compressed to achieve a suitable thickness and density.

Planar electrodes may have any shape, but has to be formed into the desired shape by cutting the supporting metal structure and the compressed powder. In doing this there is a high risk that the electrode is damaged due to vibrations from cutting the metal carrier. Also sharp conductive edges may be the result of shaping the electrode.

There is a need for an electrode that is easy to shape, and that are safe to handle during assembly of biplates and bipolar batteries.

US Patent No. 5,993,494 relates to a bipolar cell comprising bipolar plates having a conductive metal substrate with a precured active material grid comprising a mesh and positive active material in contact on one side of the conductive substrate and a negative active material grid unadhered to the conductive substrate and positioned in contact on the opposite side from the positive active material grid.

### Summary of the invention

The object of the present invention is to provide an electrode, which is easy to manufacture into a desired shape compared to prior art electrodes.

This object is achieved by an electrode as defined in claim 1, and a method for manufacturing an electrode as defined by claim 7,

It is a further object of the present invention to provide a biplate assembly and a bipolar battery comprising an electrode this is easy to manufacture and handle during assembly.

This further object is achieved by a biplate assembly as defined in claim 5, and a bipolar battery as defined in claim 15.

An advantage with the present invention is that the electrode is easier to manufacture compared to prior art electrodes.

Another advantage is that the cost for manufacturing the electrode is reduced compared to conventional prior art electrodes having a supportive carrier.

Still another advantage is that the weight of the electrode is reduced, since no conductive support structure is necessary within the electrode.

Still another advantage is that no conductive sharp edges will occur on a shaped electrode, as may be the case when cutting an electrode having a metal supportive structure.

Still another advantage is that it is easier to obtain a flat electrode from pressed powder compared with electrodes having a metal carrier, since the metal carrier is deformed during the pressing of the powder.

Further objects and advantages of the present invention will be apparent to those skilled in the art from the following detailed description of the disclosed bipolar electrochemical battery and the biplate assembly.

### Brief description of the drawings

The different embodiments shown in the appended drawings are not to scale or proportion, but exaggerated to point out different important features for the sake of clarity.
Fig. 1 shows a planar view of an electrode being arranged on a non-conductive carrier according to the invention.
Fig. 2 shows a cross-sectional view along A-A in figure 1.
Fig. 3 shows a cross-sectional view of a bipolar battery including a biplate assembly having an electrode according to the invention.
Fig. 4 shows a view of an apparatus for manufacturing an electrode according to the invention.
Fig. 5 shows a detailed view of the means for arranging active powder onto a non-conductive carrier.

### Detailed description of preferred embodiments

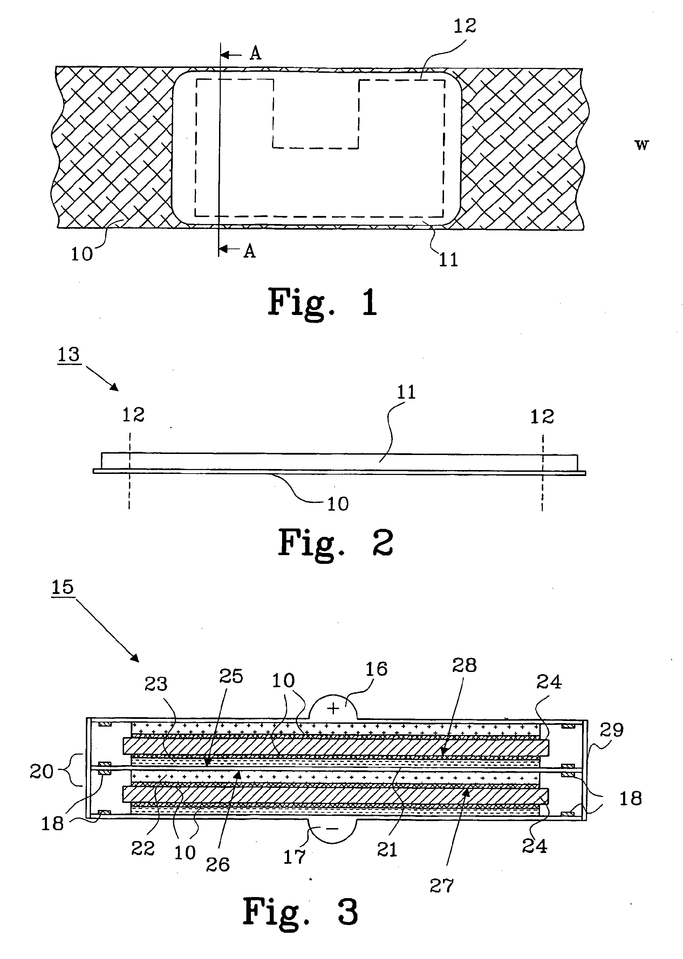

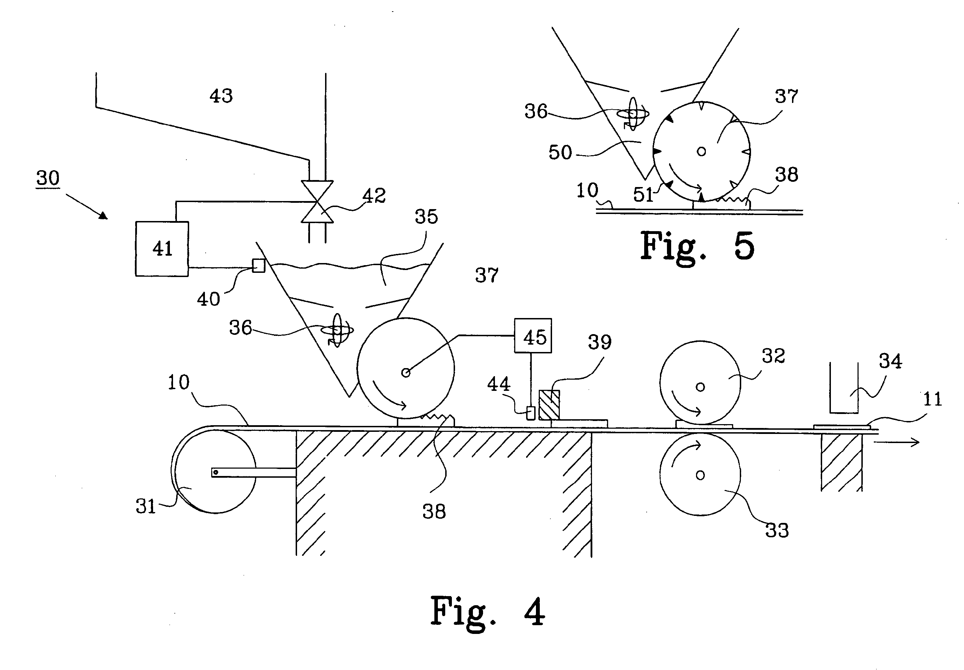

Figure 1 shows a non-metal carrier 10 made from a conductive material, such as a woven carbon fibre cloth, or non-conductive material, such as a polymer preferably made from polypropylene, having a predetermined width w and an arbitrary length. The carrier 10 is preferably arranged in a roll, see figure 4. A compressed powder 11 is arranged on the non-metal carrier 10 and a desired shape of the electrode 13 is outlined by the dashed line 12. The compressed powder 11 and the carrier 10 are cut along line 12 to form the electrode 13.

The use of pressed powder is disclosed in the PCT application PCT/SE02/01359, with the title "A method for manufacturing a biplate assembly, a biplate assembly and a bipolar battery" by the same applicant. In that application the powder is pressed directly onto the biplate to achieve thin electrodes having less active material. By pressing the active powder onto a non-metal carrier, the manufacturing process is further simplified.

For a NiMH bipolar battery, two different active materials need to be provided for manufacturing the electrodes. The positive active material in a NiMH battery manufactured according to the invention is preferably made from spherical nickel hydroxide (supplied by OMG, Finland) ; Nickel 210 fiber (supplied by INCO, USA); and Powdered Cobalt (obtainable from various suppliers). The negative material is preferably made with Metal Hydride (supplied by Treibacher, Austria) ; and Nickel 255 fiber (supplied by INCO, USA). There are numerous suppliers of all these materials, particularly in Japan and China, where the majority of Nickel Metal Hydride cells presently are manufactured.

No other materials, such as conductive additives, binders, etc. are normally included. The nickel fibers INCO 210 and 255 serve as the conductive additives and make contact with the conductive biplate, conducting current from the active material directly to the conductive biplate.

Figure 2 shows a cross-sectional view along A-A in figure 1, where lines 12 indicate the desired shape of the finished electrode 13. The compressed powder 11 is mainly situated on top of the carrier 10. During compression of the active powder, some amount of the active powder may migrate to the other side of the carrier 10 depending on the structure of the carrier 10. If a random structure of polymer is applied, almost nothing will migrate through the carrier 10, but if a grid structure of polymer is used more active material will end up on the other side of the carrier 10, i.e. the carrier 10 could be placed in the center of the electrode 13. The reference numeral 13 indicates the electrode after cutting along lines 12.

Figure 3 shows a bipolar battery 15, preferably a NiMH battery, having a positive 16 and a negative 17 end terminal. A biplate assembly 20 is provided comprising a biplate 21, a positive electrode 27 of positive active material 22 arranged on a non-metal carrier 10, and a negative electrode 28 of negative active material 23 arranged on a non-metal carrier 10. The active materials 22, 23 are powder pressed onto the carrier 10. The bipolar battery contains in this example only one biplate assembly, but several biplate assemblies may naturally be included in a bipolar battery.

The positive end terminal 16 has a positive electrode 27 and the negative end terminal 17 has a negative electrode 28. A separator 24 containing electrolyte is arranged between adjacent positive 27 and negative 28 electrodes. The non-metal carrier 10 of each electrode 27, 28 is preferably arranged towards the separator 24, as indicated in figure 3. The surface of the sides 25 and 26, respectively, of the biplate 21 is preferably a bit rough to keep the electrodes in place during manufacture and operations. The surface of the end terminals may naturally also be rough for the same purpose.

A hydrophobic barrier 18, as disclosed in the PCT application PCT/SE02/01645, with the title "A bipolar battery, a method for manufacturing a bipolar battery and a biplate assembly" by the same applicant, is provided around the positive 27 and negative 28 electrodes respectively to prevent electrolyte paths between adjacent cells. A housing 29 provides a sealing of the battery 15. The details of the construction of the battery provides a bipolar battery 15 with an electrolyte seal, the hydrophobic barrier 18, for each cell and a gas seal, the housing 29, for all cells in the battery.

The electrodes 27 and 28 including a non-metal carrier 10, preferably a non-conductive carrier, according to the invention may naturally be used in any type of bipolar battery having separately made electrodes.

Figure 4 shows an apparatus 30 for manufacturing an electrode having a non-metal carrier 10 according to the invention. A roll 31 with a tensioning device, such as a spring, supplies a non-conductive carrier 10 to the apparatus and two rollers 32 and 33 rotate to pull the carrier 10 under tension in to the apparatus. A distributor 37 arranges active powder 38 on the carrier 10, and a spreader 39 levels the active powder 38 before the powder is compressed between the rollers 32 and 33. The powder 38 may either be arranged continuously on the carrier 10, or in a discrete fashion as shown in figure 4.

A compressed powder 11 is thus arranged on the carrier 10 and a cutter 34 forms the electrode into the desired shape. Scrap material after cutting is ground and recycled, which is possible due to the use of the non-metal carrier.

An agitator 36 is provided within the powder container and provides powder with a uniform density to the distributor 37, which collects powder in a uniform volume and distributes it to the carrier 10. This process is more described in connection with figure 5 below.

The powder container is provided with a level sensor 40, and a level control unit 41 opens a valve 42 to add more powder from a powder supply 43 when the level in the powder container is too low.

A sensor 44 is also provided at the spreader 39 to monitor the amount of powder arranged on the carrier 10 prior to leveling and pressing. The sensor 44 sends a signal back to the distributor, via a control unit 45, to alter the rotation speed and thereby change the amount of powder distributed to the non-metal carrier 10.

Figure 5 shows a detailed view of the mechanism distributing the active powder 50 onto the carrier 10. The purpose of the agitator 36 is to provide a uniform density powder to the distributor 37 and prevent "bridges", i.e. voids, that could occur in the powder supply container. The distributor 37 is provided with grooves 51 having a uniform volume, which are filled with the powder 50 during rotation, and the active powder is thereafter distributed to the carrier 10 in a suitable amount.

The preferred method uses the carrier 10 as a film to convey the loose powder into the rolling mill for compaction, and the process is conducted at room ambient conditions. The time, or rate of production, is most dependent upon the powder spreading mechanism and the roll diameters. An acceptable production rate require 4 inch (approx. 10 cm) diameter rolls that have a preferred speed of 1.5 to 3 meters per minute. A lower production rate would be feasible, but not economical. Maximum speed is dependent on the equipment including material handling to cut the strip to electrode size and convey them to subsequent steps, such as assembling steps.

The physical dimensions of the finished product (electrode) depend on the equipment specified. For heat transfer considerations at the final battery level, the equipment is limited to manufacture electrodes 6 inches (approx. 15 cm) wide. The thickness of the electrodes is in the range of 0.002 to 0.050 inches (approx. 0.05 to 1.3 mm), with a preferred range of 0.010 to 0.035 inches (approx. 0.25 to 0.90 mm). The final electrodes normally have the shape of a rectangle, but other shapes are naturally possible.

The electrode thickness depends upon the ratio of power required to energy required. Higher power applications require thinner electrodes. The non-conductive carrier must transport the powder into the rolls without the material totally sieving through it. The final location of the carrier material can be anywhere within the electrode, but it is preferable to be closest to the side of the electrode that is placed in contact with the separator. The material should allow sufficient particles to penetrate so the compressive forces compact the powder, and do not form the non-conductive carrier into a film.

## Claims

1. An electrode (13) for a biplate assembly in a bipolar battery, wherein said electrode comprises:
- an active material made from an active powder (11), and
- a non-metal carrier (10),
wherein said active powder (11) is compressed onto said non-metal carrier to form said electrode,
wherein said non-metal carrier (10) is a non-conductive carrier, and
wherein said non-metal carrier (10) is made from a polymer material and has a random structure of polymer fibres.

2. The electrode according to claim 1, wherein the compressed powder (11) mainly is arranged on one side of the non-metal carrier (10).

3. The electrode according to claim 1 or 2, wherein the electrode has a thickness in the range of 0.05 to 1.3 mm.

4. The electrode according to claim 3, wherein the electrode has a preferred thickness in the range of 0.25 to 0.90 mm.

5. A biplate assembly (20) for a bipolar battery, wherein said biplate assembly comprises:
- a biplate (21),
- a positive electrode (27) of a positive active material (22), and
- a negative electrode (28) of a negative active material (23), opposite to said positive active material (22),,
wherein each electrode (27, 28) further comprises a non-metal carrier (10), and the active materials are provided in the form of active powder compressed onto the carrier,
wherein said non-metal carrier (10) is a non-conductive carrier,
wherein said non-metal carrier (10) is made from a polymer material and has a random structure of polymer fibres, and
wherein the non-metal carrier (10) is in non-contact with the biplate (21).

6. The biplate assembly according to claim 5, wherein the biplate assembly (20) further comprises a separator (24) provided with an electrolyte, said separator being in contact with the non-metal carrier (10).

7. A method for manufacturing an electrode (13) for a biplate assembly in a bipolar battery, wherein said method comprises the steps of:
- providing an active material made from an active powder;
- providing a non-metal carrier (10) ; and
- compressing said active powder onto said non-metal carrier to form said electrode,
wherein said non-metal carrier (10) is selected to be a non-conductive carrier, and
wherein said non-metal carrier (10) is made from a polymer material having a random structure of polymer fibres.

8. The method according to claim 7, wherein the method further comprises the step of forming a shape (12) of the electrode (13) .

9. The method according to claim 8, wherein the step of forming the electrode comprises cutting the active material and the non-metal carrier by a cutter (34).

10. The method according to any of claims 7-9, wherein the active material (38) is applied only to one side of the non-metal carrier (10).

11. The method according to any of claims 7-10, wherein the active material (38) is arranged continuously to the non-metal carrier (10).

12. The method according to any of claims 7-10, wherein the active material (38) is arranged discretely to the non-metal carrier (10).

13. The method according to any of claims 7-12, wherein the step of compressing the active material includes using a compressing force on an appropriate amount of active material to obtain an electrode having a thickness in the range of 0.05 to 1.3 mm.

14. The method according to claim 13, wherein the electrode is selected to have a thickness in the range of 0.25 to 0.90 mm.

15. A bipolar battery (15) **characterized in that** said bipolar battery comprises at least one electrode (27, 28) according to any of claims 1-4.

## Patentansprüche

1. Elektrode (13) für eine Bipolarplattenanordnung in einer Bipolarbatterie, wobei die Elektrode umfasst:
- ein aktives Material, das aus einem aktiven Pulver (11) hergestellt ist, und
- einen Nichtmetallträger (10);
wobei das aktive Pulver (11) auf den Nichtmetallträger gepresst ist, um die Elektrode zu bilden,
wobei der Nichtmetallträger (10) ein nichtleitender Träger ist, und
wobei der Nichtmetallträger (10) aus einem Polymermaterial hergestellt ist und eine willkürliche Struktur von Polymerfasern aufweist.

2. Elektrode nach Anspruch 1, wobei das gepresste Pulver (11) hauptsächlich auf einer Seite des Nichtmetallträgers (10) angeordnet ist.

3. Elektrode nach Anspruch 1 oder 2, wobei die Elektrode eine Dicke im Bereich von 0,05 bis 1,3 mm aufweist.

4. Elektrode nach Anspruch 3, wobei die Elektrode eine bevorzugte Dicke im Bereich von 0,25 bis 0,90 mm aufweist.

5. Bipolarplattenanordnung (20) für eine Bipolarbatterie, wobei die Bipolarplattenanordnung umfasst:
- ein Bipolarplatte (21),
- eine positive Elektrode (27) eines positiven aktiven Materials (22), und
- eine negative Elektrode (28) eines negativen aktiven Materials (23) gegenüber dem positiven aktiven Material (22),
wobei jede Elektrode (27, 28) ferner einen Nichtmetallträger (10) aufweist, und die aktiven Materialien in der Form von aktivem Pulver vorgesehen sind, das auf den Träger gepresst ist,
wobei der Nichtmetallträger (10) ein nichtleitender Träger ist, und
wobei der Nichtmetallträger (10) aus einem Polymermaterial hergestellt ist und eine willkürliche Struktur von Polymerfasern aufweist, und
wobei der Nichtmetallträger (10) mit der Bipolarplatte (21) nicht in Kontakt ist.

6. Bipolarplattenanordnung nach Anspruch 5, wobei die Bipolarplattenanordnung (20) ferner ein Trennelement (24) umfasst, das mit einem Elektrolyten versehen ist, wobei das Trennelement mit dem Nichtmetallträger (10) in Kontakt ist.

7. Verfahren zur Herstellung einer Elektrode (13) für eine Bipolarplattenanordnung in einer Bipolarbatterie, wobei das Verfahren die folgenden Schritte umfasst:
- Bereitstellen eines aktiven Materials, das aus einem aktiven Pulver hergestellt ist;
- Bereitstellen eines Nichtmetallträgers (10); und
- Pressen des aktiven Pulvers auf den Nichtmetallträger, um die Elektrode zu bilden,
wobei der Nichtmetallträger (10) so ausgewählt wird, dass er ein nichtleitender Träger ist, und
wobei der Nichtmetallträger (10) aus einem Polymermaterial mit einer willkürlichen Struktur von Polymerfasern hergestellt ist.

8. Verfahren nach Anspruch 7, wobei das Verfahren ferner den Schritt des Bildens einer Form (12) der Elektrode (13) umfasst.

9. Verfahren nach Anspruch 8, wobei der Schritt des Bildens der Elektrode ein Abschneiden des aktiven Materials und des Nichtmetallträgers durch eine Schneidvorrichtung (34) umfasst.

10. Verfahren nach einem der Ansprüche 7 bis 9, wobei das aktive Material (38) nur auf eine Seite des Nichtmetallträgers (10) aufgebracht wird.

11. Verfahren nach einem der Ansprüche 7 bis 10, wobei das aktive Material (38) kontinuierlich auf dem Nichtmetallträger (10) angeordnet wird.

12. Verfahren nach einem der Ansprüche 7 bis 10, wobei das aktive Material (38) diskret auf dem Nichtmetallträger (10) angeordnet wird.

13. Verfahren nach einem der Ansprüche 7 bis 12, wobei der Schritt des Pressens des aktiven Materials ein Verwenden einer Presskraft auf eine geeignete Menge von aktivem Material umfasst, um eine Elektrode mit einer Dicke im Bereich von 0,05 bis 1,3 mm zu erhalten.

14. Verfahren nach Anspruch 13, wobei die Elektrode so ausgewählt wird, dass sie eine Dicke im Bereich von 0,25 bis 0,90 mm aufweist.

15. Bipolarbatterie (15), **dadurch gekennzeichnet, dass** die Bipolarbatterie mindestens eine Elektrode (27, 28) nach einem der Ansprüche 1 bis 4 umfasst.

## Revendications

1. Électrode (13) destinée à un ensemble biplaque dans une batterie bipolaire, ladite électrode comprenant .
- un matériau actif constitué d'une poudre active (11), et
- un support non métallique (10),
dans laquelle ladite poudre active (11) est comprimée sur ledit support non métallique pour former ladite électrode,
dans laquelle ledit support non métallique (10) est un support non conducteur, et
dans laquelle ledit support non métallique (10) est constitué d'un matériau polymère et a une structure aléatoire de fibres de polymère.

2. Électrode selon la revendication 1, dans laquelle la poudre comprimée (11) est principalement disposée sur un côté du support non métallique (10).

3. Électrode selon la revendication 1 ou 2, l'électrode ayant une épaisseur comprise entre 0,05 et 1,3 mm.

4. Électrode selon la revendication 3, l'électrode ayant une épaisseur préférée comprise entre 0,25 et 0,90 mm.

5. Ensemble biplaque (20) destiné à une batterie bipolaire, ledit ensemble biplaque comprenant :
- une biplaque (21),
- une électrode positive (27) d'un matériau actif positif (22), et
- une électrode négative (28) d'un matériau actif négatif (23), opposée audit matériau actif positif (22),
dans lequel chaque électrode (27, 28) comprend en outre un support non métallique (10), et où les matériaux actifs sont prévus sous la forme de poudre active comprimée sur le support,
dans lequel ledit support non métallique (10) est un support non conducteur,
dans lequel ledit support non métallique (10) est constitué d'un matériau polymère et a une structure aléatoire de fibres de polymère, et
dans lequel le support non métallique (10) est sans contact avec la biplaque (21).

6. Ensemble biplaque selon la revendication 5, cet ensemble biplaque (20) comprenant en outre un séparateur (24) doté d'un électrolyte, ledit séparateur étant en contact avec le support non métallique (10).

7. Procédé de fabrication d'une électrode (13) pour un ensemble biplaque dans une batterie bipolaire, ledit procédé comprenant les étapes suivantes :
- prendre un matériau actif constitué d'une poudre active ;
- prendre un support non métallique (10) ; et
- comprimer ladite poudre active sur ledit support non métallique pour former ladite électrode,
dans lequel ledit support non métallique (10) est choisi pour être un support non conducteur, et
dans lequel ledit support non métallique (10) est constitué d'un matériau polymère présentant une structure aléatoire de fibres de polymère.

8. Procédé selon la revendication 7, ce procédé comprenant en outre l'étape de formation d'une forme (12) de l'électrode (13).

9. Procédé selon la revendication 8, dans lequel l'étape de formation de l'électrode comprend le fait de couper le matériau actif et le support non métallique à l'aide d'un cutter (34).

10. Procédé selon l'une quelconque des revendications 7 à 9, dans lequel le matériau actif (38) n'est appliqué que d'un côté du support non métallique (10).

11. Procédé selon l'une quelconque des revendications 7 à 10, dans lequel le matériau actif (38) est disposé en continu sur le support non métallique (10).

12. Procédé selon l'une quelconque des revendications 7 à 10, dans lequel le matériau actif (38) est disposé de manière discrète sur le support non métallique (10).

13. Procédé selon l'une quelconque des revendications 7 à 12, dans lequel l'étape de compression du matériau actif comprend l'emploi d'une force de compression sur une quantité appropriée de matériau actif, afin d'obtenir une électrode dont l'épaisseur est comprise entre 0,05 et 1,3 mm.

14. Procédé selon la revendication 13, dans lequel on choisit l'électrode pour que son épaisseur soit comprise entre 0,25 et 0,90 mm.

15. Batterie bipolaire (15), **caractérisée en ce que** ladite batterie bipolaire comprend au moins une électrode (27, 28) selon l'une quelconque des revendications 1 à 4.
